# FASCICULE DE BREVET EUROPEEN

(11) **EP 1 513 738 B1**
(45) Date de publication et mention de la délivrance du brevet: **28.02.2007**
(21) Numéro de dépôt: 03760727.2
(22) Date de dépôt: 13.06.2003
(51) Int. Cl.: B65D 75/00, B65D 23/08

(54) **ENVELOPPE D EMBALLAGE D OBJET(S) EN MATERIAU THERMORETR ACTABLE A MOTIF EN RELIEF**
HÜLLE ZUR VERPACKUNG EINES ODER MEHRERER OBJEKTE AUS SCHRUMPFBAREM MATERIAL MIT ERHABENEM DESIGN
ENVELOPE FOR PACKAGING OBJECT(S) MADE OF SHRINKABLE MATERIAL WITH RAISED DESIGN

(30) Priorité: 19.06.2002 FR 0207550
(43) Date de publication de la demande: 16.03.2005
(73) Titulaire: SLEEVER INTERNATIONAL COMPANY, F-91420 Morangis (FR)
(72) Inventeur: FRESNEL, Eric, F-75007 Paris (FR)
(74) Mandataire: Jaunez, Xavier
(86) Numéro de dépôt international: PCT/FR2003/001788
(87) Numéro de publication internationale: WO 2004/000684

(56) Documents cités:
- EP-A- 0 537 455
- US-A- 6 020 823

## Description

### DOMAINE DE L'INVENTION

La présente invention concerne le domaine de l'emballage d'objets, et plus particulièrement l'emballage réalisé au moyen d'une enveloppe constituée par un manchon en matière plastique thermorétractable destiné à être rétracté sur le ou les objets concernés.

### ARRIERE-PLAN DE L'INVENTION

On utilise déjà depuis une trentaine d'années la technique d'emballage d'un ou plusieurs objets à partir d'un manchon thermorétractable réalisé sous la forme d'un manchon qui est enfilé sur le ou les objets à emballer, puis thermorétracté sur ce ou ces objets. On maîtrise maintenant la technique de thermorétraction par application d'un champ thermique à l'extérieur du manchon, afin de rétracter de façon homogène le manchon sur l'objet, et ce même en cas de section fortement variable dudit objet. A titre indicatif, on arrive maintenant à des taux de rétraction pouvant atteindre 70 à 80 % en section. On maîtrise également bien les techniques d'anamorphose permettant de conserver les impressions présentes sur le manchon, de façon que ces impressions restent lisibles après rétraction du manchon sur l'objet, ce qui est tout particulièrement important lorsqu'il s'agit du domaine pharmaceutique ou cosmétique.

Jusqu'à présent, les techniques d'impression se sont limitées à des techniques classiques consistant à déposer un décor, dont l'anamorphose est contrôlée lors de la rétraction du manchon sur le ou les objets à emballer.

L'arrière-plan technologique de l'invention est illustré par les documents EP-A-0 537 455 et US-A-6 020 823 commentés brièvement ci-après.

Le document EP-A-0 537 455 décrit le marquage d'identification d'une feuille élastique d'emballage pour obtenir un motif (en particulier un quadrillage) qui subsiste lorsque la feuille est étirée. Il s'agit cependant de feuilles thermoplastiques qui sont agrafées sur des palettes, et non de manchons thermorétractables.

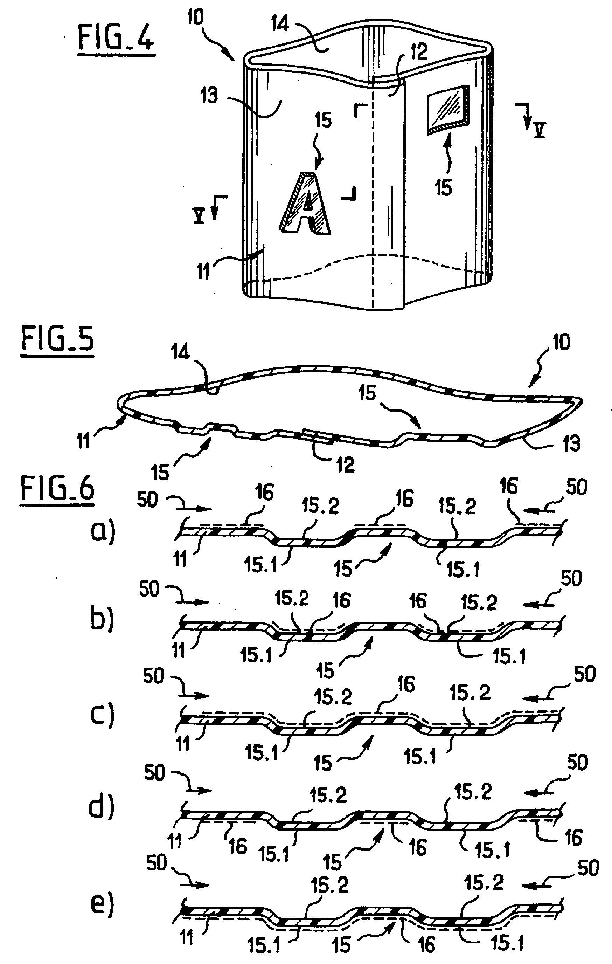

Le document US-A-6 020 823 décrit la fixation d'objets sonores ou lumineux sur une bouteille, en utilisant un manchon thermorétractable. Le manchon peut être à simple épaisseur, auquel cas les objets sont collés sur la face interne du manchon, avant la mise en place sur la bouteille et la rétraction, ou à double épaisseur, auquel cas les objets sont pris en sandwich entre deux feuilles (d'ailleurs thermorétractables ou non). Il convient de noter que le relief apparent du côté extérieur n'est que la trace de l'objet emprisonné, ainsi que cela ressort à l'évidence de la figure 6.

### OBJET DE L'INVENTION

L'invention a pour but de concevoir une nouvelle technique permettant de réaliser des motifs d'impression qui sont non seulement perceptibles visuellement par l'extérieur du manchon rétracté sur l'objet à emballer, mais aussi perceptibles au toucher.

L'obtention de reliefs sur un matériau en bande est certes utilisée dans certains domaines, mais en étant limitée à des matériaux inertes tel que le papier ou le métal souple. Aucune tentative n'a cependant été envisagée pour l'obtention de reliefs sur des matières plastiques thermorétractables, vraisemblablement en raison d'un fort préjugé pour les spécialistes qui ont tout lieu de penser que le relief réalisé avant la rétraction va s'estomper, voire même disparaître totalement, une fois le manchon rétracté sur l'objet. En effet, la rétraction de la paroi du manchon exerce une tension dans une direction circonférentielle qui tend à tirer chaque zone de la paroi du manchon, de sorte qu'il est logique de renoncer à la formation de reliefs sur de tels manchons en matière plastique thermorétractable.

### DEFINITION GENERALE DE L'INVENTION

La présente invention procède d'une approche qui va justement à l'encontre de ce préjugé, et propose une enveloppe d'emballage d'objet(s) constituée par un manchon en matière plastique thermorétractable destiné à être rétracté sur l'objet ou les objets à emballer, ledit manchon étant réalisé à partir d'un film replié sur lui-même dont les zones d'extrémité concernées sont solidarisées entre elles, ladite enveloppe étant remarquable en ce que la paroi du manchon est au moins en partie embossée selon un motif prédéterminé, de façon que ledit motif apparaisse en relief sur la face externe et/ou interne du manchon et subsiste une fois ledit manchon rétracté sur l'objet ou les objets à emballer.

L'embossage d'un motif prédéterminé permet ainsi de produire un relief qui est doublement perceptible sur la face externe du manchon, à la fois visuellement et au toucher.

De façon avantageuse, le film constitutif du manchon est un film semi-rigide comportant dans sa formulation une phase élastomérique.

Lorsque la forme des objets concernés est associée à une section faiblement variable, la rétraction du manchon a pour effet de tendre la paroi contre la surface extérieure de l'objet sans déformer de façon substantielle le motif embossé. Cependant, dès que le taux de rétreint devient notablement élevé, la tension de la paroi devient telle que le motif embossé risque d'être substantiellement affecté. A cet effet, il est prévu selon un mode de réalisation particulier de l'invention, que la face interne et/ou externe du manchon soit revêtue, au moins partiellement, au niveau du motif embossé, d'un agent technique positionné et repéré favorisant le maintien du relief lors de la rétraction dudit manchon. En particulier, la face interne et/ou externe du manchon sera revêtue au niveau des zones embossées qui sont concernées par un taux de rétreint élevé lors de la rétraction dudit manchon sur l'objet ou les objets à emballer, en particulier un taux dépassant 10 à 15 % environ.

L'agent technique peut être enduit sur la face interne et/ou externe, ledit agent technique étant un vernis thermodurcissable ou analogue bloquant localement la rétraction de la paroi du manchon au niveau du motif embossé, ou en variante un vernis thermogonflant ou analogue repoussant localement la paroi du manchon au niveau du motif embossé lors de la rétraction du manchon.

Il sera alors intéressant de prévoir que le vernis technique thermodurcissable ou thermogonflant soit choisi réactivable à une température compatible avec la plage thermique de thermorétraction du film constitutif du manchon.

Le vernis technique thermodurcissable ou thermogonflant pourra être déposé sur une zone entourant le motif embossé et/ou être déposé sur la face interne et/ou externe du manchon, en particulier dans les creux formés par le motif embossé.

En variante, on pourra prévoir que l'agent technique est déposé sur la face interne ou externe du manchon dans les creux formés par le motif embossé, ledit agent technique étant une plaquette rapportée rigide ou semi-rigide. En particulier, la plaquette précitée pourra présenter une trame fine sur sa face libre, par exemple une trame à diffractions multiples de type lenticulaire.

On pourra enfin prévoir que la face interne et/ou externe du manchon présente un tramage ou analogue sur certains au moins des reliefs formés par le motif embossé.

L'invention concerne également un procédé de fabrication d'une enveloppe d'emballage d'objet(s) présentant l'une au moins des caractéristiques précitées.

Conformément à l'invention, le procédé de fabrication est remarquable en ce que le film destiné à constituer un manchon thermorétractable est embossé à plat selon un motif prédéterminé, le film embossé étant ensuite replié sur lui-même de façon que ledit motif apparaisse en relief sur la face externe convexe et/ou la face interne concave dudit film, et les zones d'extrémité concernées sont solidarisées entre elles.

On utilisera de préférence, pour la mise en oeuvre de ce procédé, un film semi-rigide comportant dans sa formulation une phase élastomérique.

Conformément à une caractéristique particulièrement avantageuse du procédé, le film est revêtu, au niveau du motif à embosser ou déjà embossé, sur la face dudit film correspondant au côté creux de l'embossage et/ou la face opposée, avec un agent technique positionné et repéré favorisant le maintien du relief lors de la rétraction de la paroi du film.

Dans un premier mode d'exécution, la face concernée du film est enduite par un agent technique constitué par un vernis thermodurcissable ou analogue, ou un vernis thermogonflant ou analogue.

De préférence alors, les étapes d'embossage et d'éventuelle enduction locale par un agent technique sont mises en oeuvre en continu sur le film défilant à plat, avant conformation dudit film en gaine continue stockable à l'état aplati en étant enroulée sur une bobine, les manchons utilisés pour l'emballage d'objets étant obtenus par tronçonnage de ladite gaine continue.

Dans un autre mode d'exécution, la face concernée du film est revêtue, dans les creux d'embossage, par un agent technique constitué par une plaquette rapportée rigide ou semi-rigide. On pourra alors prévoir que la face libre de la plaquette précitée soit travaillée pour présenter une trame fine, en particulier une trame à diffractions multiples de type lenticulaire.

De préférence alors, les étapes d'embossage et de mise en place de plaquette(s) rapportée(s), et aussi d'éventuel travail de ladite ou desdites plaquettes rapportées, sont mises en oeuvre en continu sur le film défilant à plat, avant conformation dudit film en gaine continu stockable à l'état aplati en étant enroulée sur une bobine, les manchons utilisés pour l'emballage d'objet(s) étant obtenus par tronçonnage de ladite gaine continue.

On pourra enfin prévoir que le film défilant à plat subit, au niveau de certains au moins des reliefs d'embossage, un tramage ou analogue.

D'autres caractéristiques et avantages de l'invention apparaîtront plus clairement à la lumière de la description qui va suivre et des dessins annexés, concernant des modes de réalisation particuliers.

### BREVE DESCRIPTION DES DESSINS

Il sera fait référence aux figures où :
- la figure 1 illustre une enveloppe d'emballage d'objet(s) à paroi embossée conformément à l'invention, destinée à être posée sur un objet qui est ici un vaporisateur de parfum ;
- la figure 2 illustre l'enveloppe précitée rétractée sur l'objet, avec subsistance des motifs embossés (ici un A et un carré) sur la face externe de ladite enveloppe;
- la figure 3 est une coupe transversale de l'enveloppe précitée selon la ligne III-III de la figure 1, au niveau des zones embossées de la paroi du film constitutif du manchon ;
- la figure 4, et la figure 5 qui en est la coupe selon V-V, illustrent une autre variante dans laquelle le motif embossé de forme carrée apparaît en relief sur la face interne du manchon ;
- la figure 6 illustre en coupe partielle la paroi du manchon, représentée à plat, au niveau d'un motif embossé, apparaissant sur la face externe ou interne du manchon, avec une enduction au moins partielle de la face interne et/ou de la face externe du manchon, par un agent technique positionné et repéré, tel qu'un vernis favorisant le maintien du relief d'embossage lors de la rétraction dudit manchon ;
- la figure 7 est une coupe analogue à celle de la figure 3, illustrant une autre variante dans laquelle, au niveau du creux du motif carré embossé, l'agent technique précité est une plaquette rapportée rigide ou semi-rigide.;
- la figure 8 illustre à très grande échelle le détail VIII de la figure 7, pour montrer le tramage possible de la face libre de la plaquette, en particulier de type lenticulaire ;
- la figure 9 illustre en perspective un procédé de fabrication en continu d'une enveloppe d'emballage, conforme à l'invention, à partir d'un film en matière plastique thermorétractable défilant à plat ; et
- la figure 10 illustre le stockage à l'état aplati de la gaine continue ainsi réalisée.

### DESCRIPTION DETAILLEE DE L'INVENTION

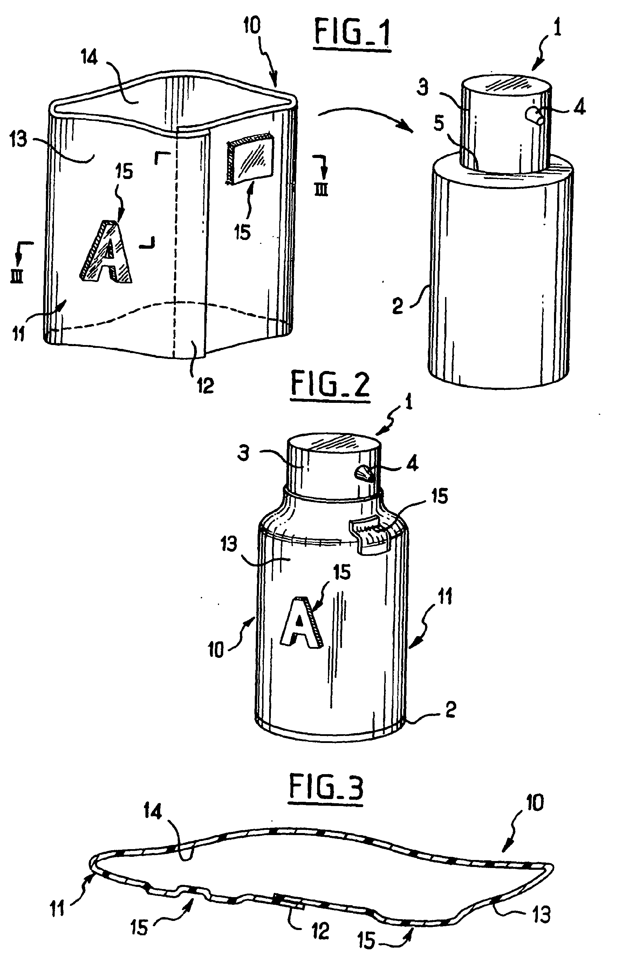

La figure 1 illustre une enveloppe d'emballage d'objet(s) conforme à l'invention, destinée à envelopper un objet 1, qui est ici un diffuseur de parfum, dont on distingue le corps 2 surmonté d'un capuchon formant poussoir 3 équipé d'une buse de vaporisation 4, la zone de raccordement circulaire, notée 5, correspondant à une variation importante de section entre le corps 2 et le capuchon 3. L'enveloppe d'emballage 10 est constituée par un manchon 11 en matière plastique thermorétractable, qui est ouvert à ses deux extrémités, ledit manchon étant représenté non pas parfaitement cylindrique, mais sous forme d'une gaine ouverte avec deux plis d'extrémité, pour rappeler que ce type de manchon est obtenu par tronçonnage d'une gaine aplatie enroulée sur une bobine. De façon classique, le manchon 11 est réalisé à partir d'une gaine continue elle-même obtenue par mise bord-à-bord ou bord-sur-bord d'un film replié sur lui-même, avec un scellage au niveau de la zone de recouvrement, en formant par exemple un rabat noté 12. Le manchon ainsi formé présente une face externe notée 13, et une face interne notée 14. Le manchon 11 est donc réalisé à partir d'un film replié sur lui-même dont les zones d'extrémité concernées sont solidarisées entre elles, conformément à une technique bien connue dans l'art concerné.

Conformément à une caractéristique essentielle de l'invention, la paroi du manchon 11 est au moins en partie embossée selon un motif prédéterminé 15, de façon que ledit motif apparaisse en relief sur la face externe 13 et/ou interne 14 du manchon 11 et subsiste une fois ledit manchon rétracté sur l'objet ou les objets emballés.

A titre purement illustratif, on a schématisé ici le motif embossé 15 par la lettre A et un carré décalé vers le haut par rapport à ladite lettre, ledit motif étant en l'espèce en saillie sur la face externe 13 du manchon. Ce motif embossé 15 est ainsi parfaitement perceptible à la fois visuellement et au toucher. La coupe de la figure 3 permet de mieux appréhender l'agencement du motif embossé 15, qui est par exemple obtenu, comme on le verra par la suite, par passage d'un film défilant entre deux rouleaux ou formes d'embossage qui présentent des gravures associées au motif désiré, lesdites gravures étant en relief ou en creux selon le cas.

Comme cela a été illustré sur les figures 4 et 5, le motif embossé 15 peut être organisé de façon à apparaître, en tout ou partie, en relief sur la face interne 14 du manchon 11. La partie du motif embossé 15 qui est schématisée par un carré apparaît ainsi en relief sur la face interne 14, tandis que la partie schématisée par un A apparaît en relief sur la face externe 13.

Le manchon 11 est ainsi réalisé, avec son motif embossé 15 saillant en relief, sur la face externe 13 et/ou la face interne 14 dudit manchon. Le manchon 11 est ensuite enfilé sur l'objet 1, et l'ensemble passe dans un tunnel de rétraction (non représenté) qui a pour effet de rétracter la paroi du manchon sur la surface extérieure de l'objet, le résultat final étant illustré sur la figure 2. Comme on peut le constater, le motif embossé 15 reste apparent en relief, ici sur la face externe du manchon rétracté, en subsistant ainsi malgré la rétraction dudit manchon, et ce malgré le taux de rétreint élevé au niveau du raccordement 5 où se trouve justement le motif carré embossé, le motif en lettre A étant quant à lui moins sollicité lors de la rétraction.

Lorsque la forme de l'objet concerné à emballer présente des variations de section importantes, le taux de rétreint peut être variable dans une très large mesure pour le manchon concerné, ce taux pouvant parfois atteindre des valeurs allant jusqu'à 70 à 80 %. Plus le taux de rétreint est élevé lors de la rétraction du manchon sur l'objet, plus le risque que le motif embossé 15 soit affecté devient important. Dans ce cas, et conformément à une autre caractéristique importante de l'invention, la face interne 14 et/ou externe 13 du manchon 11 est revêtue au moins partiellement, au niveau du motif embossé 15, d'un agent technique positionné et repéré favorisant le maintien du relief lors de la rétraction du manchon. Ce revêtement par un agent technique sera prioritairement prévu au niveau des zones embossées qui sont concernées par un taux de rétreint élevé lors de la rétraction dudit manchon sur l'objet ou les objets à emballer, en particulier un taux dépassant 10 à 15 % environ. Les techniques actuelles d'impression sont capables d'assurer un repérage très précis (au dixième de millimètre près), ce qui garantit un revêtement très précis au niveau du motif embossé.

Conformément à un premier mode d'exécution, l'agent technique est enduit sur la face concernée du manchon, en étant réalisé sous la forme d'un vernis spécifique.

Une telle enduction est illustrée sur la figure 6, avec des exemples notés a) à e).

Sur ces figures, on distingue des zones du motif embossé 15, lequel présente des parties en relief ou mâles 15.1, du côté du film qui correspond à une face du manchon formé, et des parties en creux ou femelles 15.2 associées à la face opposée dudit manchon. Sur ces figures, l'enduction d'agent technique est schématisée par la représentation d'une couche en pointillé 16.

En a), l'agent technique 16 est déposé sur une zone de la face concernée entourant le motif embossé 15.

En b), l'agent technique 16 est déposé sur la même face, mais dans les seuls creux formés par le motif embossé 15.

En c), l'enduction d'agent technique 16 concerne à la fois les creux formés par le motif embossé 15, et les zones entourant ledit motif embossé.

Bien entendu, cette enduction d'agent technique pourra être effectuée sur l'autre face du manchon, comme cela a été illustré en d) et e), et ce en plus de l'enduction de face précédente ou en remplacement de celle-ci. L'enduction pourra ainsi concerner la face externe et/ou la face interne du manchon. Cependant, l'enduction de la face interne sera souvent préférable dans la mesure où le manchon est obtenu à partir d'une gaine continue, stockée à plat, de sorte que la présence d'une enduction sur la face interne rend cette enduction parfaitement protégée de l'extérieur lors des manipulations de la gaine en vue du tronçonnage de celle-ci sous forme de manchons individuels, et lors de la pose des manchons ainsi tronçonnés.

L'agent technique enduit 16 pourra être un vernis thermodurcissable ou analogue bloquant localement la rétraction de la paroi du manchon 11 au niveau du motif embossé 15. En variante, on pourra utiliser comme agent technique enduit 16 une encre ou un vernis thermogonflant ou analogue qui repousse localement la paroi du manchon 11 au niveau du motif embossé 15 lors de la rétraction du manchon 11.

De préférence, le vernis technique thermodurcissable ou thermogonflant 16 sera choisi réactivable à une température compatible avec la plage thermique de thermorétraction du film constitutif du manchon 11.

Le blocage local de la rétraction de la paroi du manchon permet de préserver, avec une très grande précision, l'aspect et la forme du motif embossé lors de la rétraction du manchon, et ce même pour des taux de rétreint très élevés. L'utilisation d'un vernis thermodurcissable ou analogue procède alors d'une sorte de gel local de la paroi du manchon, qui permet de résister aux tensions s'exerçant sur la paroi dans la direction circonférentielle lors de la rétraction.

L'utilisation d'un agent thermogonflant ou analogue aboutit à peu près au même résultat, qui est le maintien du relief embossé, mais en agissant sous forme d'un gonflage localisé des parties en relief pour maintenir ledit relief lors de la rétraction. Dans ce cas, il va de soi que l'enduction concernera uniquement la face interne ou externe qui présente les parties en creux du motif embossé.

Les vernis techniques utilisés, qu'ils soient thermodurcissables ou thermogonflants, pourront être mis en action par tout type d'agent extérieur, tel que chaleur, irradiation, ou par exposition à un rayonnement ultraviolet (d'où l'expression "ou analogue" utilisée plus haut). En cas d'activation par la chaleur, la température de réactivation sera de préférence choisie inférieure au point de ramollissement de la paroi du manchon, de façon que le vernis soit pleinement actif lors de la mise en oeuvre de la rétraction du manchon sur l'objet.

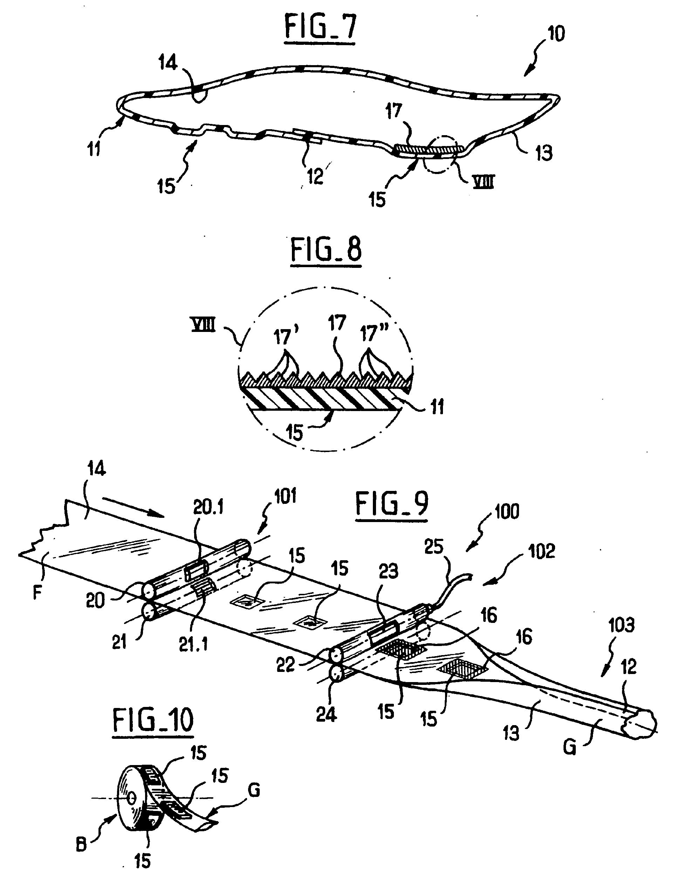

Conformément à un autre mode d'exécution, l'agent technique est déposé sur la face interne ou externe du manchon dans les creux formés par le motif embossé, ledit agent étant constitué par une plaquette rapportée rigide ou semi-rigide. Une telle variante est illustrée à la figure 7, où l'on distingue une plaquette 17, dont la rigidité propre est suffisante pour assurer la fonction mécanique de maintien du motif embossé lors de la rétraction du manchon, en résistant aux efforts exercés dans une direction circonférentielle. La plaquette 17 pourra être auto-adhésive, et présenter une épaisseur de l'ordre du millimètre.

Comme cela a été schématisé sur le détail de la figure 8, la face libre de la plaquette rapportée 17 peut présenter une trame fine, en particulier une trame à diffractions multiples de type lenticulaire.

On distingue ainsi des facettes parallèles 17',17' ' organisées selon deux directions différentes, permettant d'avoir l'effet optique ou de mouvement procuré par une trame de type lenticulaire.

Pour le matériau constitutif de l'enveloppe, on utilisera de préférence des films thermoplastiques en matériau à mémoire, mono-orientés ou bi-orientés, réalisés en polystyrène ou polypropylène, matériaux qui se prêtent particulièrement bien à la déformation. Les essais effectués par la demanderesse ont montré qu'on obtenait d'excellents résultats en utilisant un film semi-rigide comportant dans sa formulation une phase élastomérique. Un tel matériau est en effet apparu extrêmement favorable pour la rémanence du motif embossé une fois que le manchon a été rétracté sur un objet, et ce même en cas d'objet présentant des variations de section importantes.

Le motif embossé pourra être naturellement de type très divers, allant de représentations figuratives ou de textes, à l'instar des cartes de crédit, mais pourra également former un motif décoratif global concernant la presque totalité du manchon, en vue alors de conférer un aspect externe spécifique à la paroi externe du manchon, par exemple en imitant l'aspect d'un gainage de cuir ou d'un papier à grains en relief.

On pourra enfin prévoir que la face interne 14 et/ou externe 13 du manchon 11 présente un tramage ou analogue (de type lenticulaire par exemple) sur certains au moins des reliefs formés par le motif embossé 15 (variante non illustrée) .

L'invention concerne également un procédé de fabrication d'une enveloppe d'emballage d'objet(s) du type précité, et on pourra se reporter à la figure 9 qui illustre les différentes étapes du procédé.

Sur la figure 9, on distingue ainsi un film F défilant à plat en continu, en passant au niveau d'un poste général de traitement 100. Il s'agira de préférence d'un film semi-rigide comportant dans sa formulation une phase élastomérique.

Le film F commence d'abord par passer au niveau d'un poste 101 d'embossage. Le film F passe par exemple entre deux rouleaux 20, 21 complémentaires, présentant ici respectivement des creux 20.1 et des reliefs homologues 21.1, qui réalisent un embossage localisé 15 du film F lors du passage entre lesdits rouleaux pressés l'un contre l'autre.

Le film F embossé passe ensuite au niveau d'un poste d'enduction 102, au cours duquel un rouleau d'enduction 22, présentant des zones actives 23, réalise une enduction locale avec un agent technique 16, positionné et repéré, favorisant le maintien du relief lors de la rétraction ultérieure. Un contre-rouleau 24 garantit une bonne application du rouleau d'enduction 22, lequel est alimenté en vernis par une conduite associée 25.

Le film F ainsi embossé et enduit localement arrive enfin au niveau d'un poste de conformation 103, où le film est conformé en gaine G, par rapprochement de ses bords latéraux 12 et solidarisation au niveau desdits bords, par exemple au moyen d'un scellage à chaud traditionnel, le motif embossé 15 apparaissant alors en.relief sur la face externe convexe ou la face interne concave, selon le cas.

Ainsi, et conformément à l'invention, on peut réaliser une fabrication continue selon laquelle le film F destiné à constituer un manchon thermorétractable 11 est embossé à plat selon un motif prédéterminé 15, le film F embossé étant ensuite replié sur lui-même de façon que ledit motif paraisse en relief sur la face externe convexe 13 et/ou la face interne concave 14 dudit film, et les zones d'extrémité concernées 12 sont solidarisées entre elles.

Avant la mise en conformation en gaine continue, le film F peut être éventuellement enduit, de préférence au niveau du motif déjà embossé 15, sur la face 14 du film correspondant aux côtés creux de l'embossage et/ou sur la face opposée, avec un agent technique 16 positionné et repéré favorisant le maintien du relief lors de la rétraction de la paroi du film.

En variante, on pourra prévoir que l'étape d'enduction (poste 102) est réalisée avant l'étape d'embossage (poste 101).

Les étapes d'embossage et d'éventuelle enduction locale par un agent technique positionné et repéré sont ainsi mises en oeuvre en continu sur le film défilant à plat, avant conformation dudit film en gaine continue G.

Si l'enduction du film par un vernis technique positionné et repéré est remplacée par le dépôt d'une plaquette rapportée rigide ou semi-rigide, il sera prévu alors un poste spécifique de mise en place de la ou des plaquettes (non représenté ici), en amont ou en aval du poste d'embossage, ainsi éventuellement qu'un poste de tramage des plaquettes défilant en continu (comportant par exemple des rouleaux à face externe gravée au laser pour créer par pression des microsillons selon une géométrie prédéterminée), en particulier pour réaliser des trames à diffractions multiples de type lenticulaire. Là encore, le procédé est mis en oeuvre en continu sur le film défilant à plat, avant conformation dudit film en gaine continue G.

On pourra enfin prévoir un tramage ou analogue du film au niveau de certains au moins des reliefs d'embossage. Un tel tramage, par exemple de type lenticulaire, peut être réalisé au niveau du poste d'embossage, le travail s'effectuant sur la face opposée à la face avec laquelle coopère l'outil d'embossage.

Comme illustré sur la figure 10, la gaine continue G est stockable à l'état aplati en étant enroulée sur une bobine B, les manchons 11 utilisés pour l'emballage d'objets étant alors obtenus par tronçonnage de ladite gaine continue.

On est ainsi parvenu à réaliser une enveloppe d'emballage présentant des motifs d'impression qui sont à la fois perceptibles visuellement et au toucher à l'extérieur de l'enveloppe rétractée sur l'objet, et ce pour des formes très variées d'objets, et même des formes comportant des variations de section très importantes.

Il devient dès lors envisageable d'utiliser des techniques parfaitement maîtrisées d'embossage de matériaux inertes tels que le papier et le métal, par passage entre des formes gravées, ces techniques étant capables de réaliser des repérages extrêmement précis, avec des précisions inférieures au dixième de millimètre. Ainsi, l'invention permet de réaliser des embossages extrêmement précis et variés dans leur conformation, tout en étant assuré que les motifs embossés subsistent encore sur la face externe et/ou externe de l'enveloppe après rétraction de ladite enveloppe sur l'objet ou les objets à emballer.

L'invention n'est pas limitée aux modes de réalisation qui viennent d'être décrits, mais englobe au contraire toute variante reprenant dans le cadre des revendications annexées les caractéristiques essentielles énoncées plus haut.

## Revendications

1. Enveloppe d'emballage d'objet(s) constituée par un manchon (11) en matière plastique thermorétractable destiné à être rétracté sur l'objet ou les objets à emballer, ledit manchon étant réalisé à partir d'un film replié sur lui-même dont les zones d'extrémité concernées sont solidarisées entre elles, **caractérisée en ce que** la paroi du manchon (11) est au moins en partie embossée selon un motif prédéterminé (15), de façon que ledit motif apparaisse en relief sur la face externe (13) et/ou interne (14) du manchon (11) et subsiste une fois ledit manchon rétracté sur l'objet ou les objets à emballer.

2. Enveloppe d'emballage d'objet (s) selon la revendication 1, **caractérisée en ce que** le film constitutif du manchon (11) est un film semi-rigide comportant dans sa formulation une phase élastomérique.

3. Enveloppe d'emballage d'objet(s) selon la revendication 1 ou la revendication 2, **caractérisée en ce que** la face interne (14) et/ou externe (13) du manchon (11) est revêtue au moins partiellement, au niveau du motif embossé (15), d'un agent technique (16, 17) positionné et repéré favorisant le maintien du relief lors de la rétraction dudit manchon.

4. Enveloppe d'emballage d'objet(s) selon la revendication 3, **caractérisée en ce que** la face interne (14) et/ou externe (13) du manchon (11) est revêtue par l'agent technique (16, 17) au niveau des zones embossées qui sont concernées par un taux de rétreint élevé lors de la rétraction dudit manchon sur l'objet ou les objets à emballer, en particulier un taux dépassant 10 à 15 % environ.

5. Enveloppe d'emballage d'objet(s) selon la revendication 3 ou la revendication 4, **caractérisée en ce que** l'agent technique (16) est enduit sur la face interne (14) et/ou externe (13), et ledit agent technique est un vernis thermodurcissable ou analogue bloquant localement la rétraction de la paroi du manchon (11) au niveau du motif embossé (15).

6. Enveloppe d'emballage d'objet(s) selon la revendication 3 ou la revendication 4, **caractérisée en ce que** l'agent technique (16) est enduit sur la face interne (14) et/ou externe (13), et ledit agent technique est un vernis thermogonflant ou analogue repoussant localement la paroi du manchon (11) au niveau du motif embossé (15) lors de la rétraction du manchon (11).

7. Enveloppe d'emballage d'objet(s) selon la revendication 5 ou la revendication 6, **caractérisée en ce que** le vernis technique thermodurcissable ou thermogonflant (16) est choisi réactivable à une température compatible avec la plage thermique de thermorétraction du film constitutif du manchon (11).

8. Enveloppe d'emballage d'objet(s) selon l'une des revendications 5 à 7, **caractérisée ce que** le vernis technique thermodurcissable ou thermogonflant (16) est déposé sur une zone entourant le motif embossé (15).

9. Enveloppe d'emballage d'objet(s) selon l'une des revendications 5 à 8, **caractérisée en ce que** le vernis technique thermodurcissable ou thermogonflant (16) est déposé sur la face interne (14) ou externe (13) du manchon (11) dans les creux formés par le motif embossé (15).

10. Enveloppe d'emballage d'objet(s) selon la revendication 3 ou la revendication 4, **caractérisée en ce que** l'agent technique (17) est déposé sur la face interne (14) ou externe (13) du manchon (11) dans les creux formés par le motif embossé (15), et ledit agent technique est une plaquette rapportée rigide ou semi-rigide.

11. Enveloppe d'emballage d'objet(s) selon la revendication 10, **caractérisée en ce que** la plaquette rapportée rigide ou semi-rigide (17) présente une trame fine (17', 17' ') sur sa face libre, en particulier une trame à diffractions multiples de type lenticulaire.

12. Enveloppe d'emballage d'objet(s) selon l'une des revendications 1 à 11, **caractérisée en ce que** la face interne (14) et/ou externe (13) du manchon (11) présente un tramage ou analogue sur certains au moins des reliefs formés par le motif embossé (15).

13. Procédé de fabrication d'une enveloppe d'emballage d'objet(s) selon l'une des revendications 1 à 12, **caractérisé en ce que** le film (F) destiné à constituer un manchon thermorétractable (11) est embossé à plat selon un motif prédéterminé (15), le film (F) embossé étant ensuite replié sur lui-même de façon que ledit motif apparaisse en relief sur la face externe convexe (13) et/ou la face interne concave (14) dudit film, et les zones d'extrémité concernées (12) sont solidarisées entre elles.

14. Procédé selon la revendication 13, **caractérisé en ce qu'**on utilise un film semi-rigide comportant dans sa formulation une phase élastomérique.

15. Procédé selon la revendication 14, **caractérisé en ce que** le film (F) est revêtu, au niveau du motif à embosser ou déjà embossé (15), sur la face dudit film correspondant au côté creux de l'embossage et/ou la face opposée, avec un agent technique (16, 17) positionné et repéré favorisant le maintien du relief lors de la rétraction de la paroi du film.

16. Procédé selon la revendication 15, **caractérisé en ce que** la face concernée du film est enduite par un agent technique (16) constitué par un vernis thermodurcissable ou analogue, ou un vernis thermogonflant ou analogue.

17. Procédé selon la revendication 15 ou la revendication 16, **caractérisé en ce que** les étapes d'embossage et d'éventuelle enduction locale par un agent technique (16) sont mises en oeuvre en continu sur le film (F) défilant à plat, avant conformation dudit film en gaine continue (G) stockable à l'état aplati en étant enroulée sur une bobine (B), les manchons (11) utilisés pour l'emballage d'objet(s) étant obtenus par tronçonnage de ladite gaine continue.

18. Procédé selon la revendication 15, **caractérisé en ce que** la face concernée du film est revêtue, dans les creux d'embossage, par un agent technique (17) constitué par une plaquette rapportée rigide ou semi-rigide.

19. Procédé selon la revendication 18, **caractérisé en ce que** la face libre de la plaquette rapportée rigide ou semi-rigide (17) est travaillée pour présenter une trame fine, en particulier une trame à diffractions multiples de type lenticulaire.

20. Procédé selon la revendication 18 ou la revendication 19, **caractérisé en ce que** les étapes d'embossage et de mise en place de plaquette (s) rapportée(s) (17), et aussi d'éventuel travail de ladite ou desdites plaquettes rapportées, sont mises en oeuvre en continu sur le film (F) défilant à plat, avant conformation dudit film en gaine continue (G) stockable à l'état aplati en étant enroulée sur une bobine (B), les manchons (11) utilisés pour l'emballage d'objet(s) étant obtenus par tronçonnage de ladite gaine continue.

21. Procédé selon la revendication 17 ou la revendication 20, **caractérisé en ce que** le film (F) défilant à plat subit, au niveau de certains au moins des reliefs d'embossage, un tramage ou analogue.

## Claims

1. A wrapper for packaging one or more articles, the wrapper being constituted by a sleeve (11) of heat-shrink plastics material for shrinking onto the article(s) for packaging, said sleeve being made from a film that is folded in half and whose corresponding end zones are united, the wrapper being **characterized in that** the wall of the sleeve (11) is embossed at least in part with a predetermined pattern (15) so that said pattern appears in relief on the outside face (13) and/or the inside face (14) of the sleeve (11) and remains after said sleeve has been shrunk onto the article(s) to be packaged.

2. An article-packaging wrapper according to claim 1, **characterized in that** the film constituting the sleeve (11) is a semi-rigid film including an elastomeric phase in its formulation.

3. An article-packaging wrapper according to claim 1 or claim 2, **characterized in that** the inside and/or outside face (14 and/or 13) of the sleeve (11) is coated at least in part, in the location of the embossed pattern (15), in a technical agent (16, 17) in a registered position for encouraging retention of the relief during shrinkage of said sleeve.

4. An article-packaging wrapper according to claim 3, **characterized in that** the inside and/or outside face (14 and/or 13) of the sleeve (11) is coated in the technical agent (16, 17) in the location of embossed zones that are associated with a high shrinkage ratio during shrinking of said sleeve on the article(s) to be packaged, in particular a ratio exceeding about 10% to 15%.

5. An article-packaging wrapper according to claim 3 or claim 4, **characterized in that** the technical agent (16) is coated on the inside and/or outside face (14 and/or 13), and said technical agent is a thermosetting varnish or the like that locally blocks shrinkage of the wall of the sleeve (11) in the location of the embossed pattern (15).

6. An article-packaging wrapper according to claim 3 or claim 4, **characterized in that** the technical agent (16) is coated on the inside and/or outside face (14 and/or 13), and said technical agent is a thermoswelling varnish or the like that locally pushes back the wall of the sleeve (11) in the location of the embossed pattern (15) during shrinkage of the sleeve (11).

7. An article-packaging wrapper according to claim 5 or claim 6, **characterized in that** the thermosetting or thermoswelling technical varnish (16) is selected to be reactivatable at a temperature compatible with the temperature range for heat-shrinking the film constituting the sleeve (11).

8. An article-packaging wrapper according to any one of claims 5 to 7, **characterized in that** the thermosetting or thermoswelling technical varnish (16) is deposited on a zone surrounding the embossed pattern (15).

9. An article-packaging wrapper according to any one of claims 5 to 8, **characterized in that** the thermosetting or thermoswelling technical varnish (16) is deposited on the inside or outside face (14 or 13) of the sleeve (11) in the recesses formed by the embossed pattern (15).

10. An article-packaging wrapper according to claim 3 or claim 4, **characterized in that** technical agent (17) is deposited on the inside or outside face (14 or 13) of the sleeve (11) in the recesses formed by the embossed pattern (15), and said technical agent is a rigid or semi-rigid insert.

11. An article-packaging wrapper according to claim 10, **characterized in that** the rigid or semi-rigid insert (17) presents a fine screen (17', 17' ') on its free face, in particular a multiple-diffraction screen of lens type.

12. An article-packaging wrapper according to any one of claims 1 to 11, **characterized in that** the inside and/or outside face (14 and/or 13) of the sleeve (11) presents screening or the like on at least some of the portions in relief formed by the embossed pattern (15).

13. A method of manufacturing an article-packaging wrapper according to any one of claims 1 to 12, **characterized in that** the film (F) for constituting a heat-shrink sleeve (11) is embossed while flat with a predetermined pattern (15), the embossed film (F) subsequently be folded in half so that said pattern appears in relief on the convex outside face (13) and/or on the concave inside face (14) of said film, and the end zones concerned (12) are united.

14. A method according to claim 13, **characterized in that** a semi-rigid film is used that includes an elastomeric phase in its formulation.

15. A method according to claim 14, **characterized in that** the film (F) is coated, in the location of the pattern (15) that is to be embossed or that has already been embossed, on the face of said film that corresponds to the recessed side of the embossing and/or on the opposite face, with a technical agent (16, 17) that is in a registered position for encouraging retention of the relief during shrinkage of the wall of the film.

16. A method according to claim 15, **characterized in that** the face concerned of the film is coated in a technical agent (16) constituted by a thermosetting varnish or the like, or by a thermoswelling varnish or the like.

17. A method according to claim 15 or claim 16, **characterized in that** the steps of embossing and optionally of locally coating in a technical agent (16) are implemented continuously on the film (F) while it travels flat, prior to said film being shaped into a continuous sheath (G) that can be stored in the flattened state by being wound onto a reel (B), the sleeves (11) used for packaging article(s) being obtained by cutting said continuous sheath into segments.

18. A method according to claim 15, **characterized in that** the face concerned of the film is coated in the recesses of the embossing in a technical agent (17) constituted by a rigid or semi-rigid insert.

19. A method according to claim 18, **characterized in that** the free face of the rigid or semi-rigid insert (17) is worked to present a fine screen, in particular a multiple-diffraction screen of lens type.

20. A method according to claim 18 or claim 19, **characterized in that** the step of embossing and of putting the insert(s) (17) into place, and also optionally of working said inserts, are implemented continuously on the film (F) traveling while flat, prior to said film being shaped into a continuous sheath (G) storable in the flattened state by being wound on a reel (B), the sleeves (11) used for packaging article(s) being obtained by cutting said continuous sheath into segments.

21. A method according to claim 17 or claim 20, **characterized in that** the film (F) while traveling flat is subjected, in the location of at least some of the embossed patterns in relief, to screening or the like.

## Patentansprüche

1. Umhüllung zur Verpackung eines bzw. mehrerer Objekte, die aus einer Hülle (11) aus wärmeschrumpfbarem Kunststoff gebildet ist, die dazu bestimmt ist, auf das bzw. die zu verpackenden Objekte geschrumpft zu werden, wobei die Hülle aus einer Folie hergestellt ist, die auf sich selbst umgeschlagen ist und deren betreffende Endzonen fest miteinander verbunden sind, **dadurch gekennzeichnet, dass** die Wand der Hülle (11) zumindest teilweise entsprechend einem vorgegebenen Motiv (15) geprägt ist, derart, dass dieses Motiv als Relief auf der Außenfläche (13) und/oder Innenfläche (14) der Hülle (11) erscheint und bestehen bleibt, nachdem die Hülle auf das bzw. die zu verpackenden Objekte geschrumpft wurde.

2. Umhüllung zur Verpackung eines bzw. mehrerer Objekte nach Anspruch 1, **dadurch gekennzeichnet, dass** die Folie, aus der die Hülle (11) gebildet ist, eine halbstarre Folie ist, die in ihrer Formulierung eine elastomere Phase enthält.

3. Umhüllung zur Verpackung eines bzw. mehrerer Objekte nach Anspruch 1 oder Anspruch 2, **dadurch gekennzeichnet, dass** die Innenfläche (14) und/oder die Außenfläche (13) der Hülle (11) zumindest teilweise im Bereich des Prägemotivs (15) mit einem technischen Mittel (16, 17) überzogen ist, das derart positioniert und ausgerichtet ist, dass es den Erhalt des Reliefs während des Schrumpfens der Hülle begünstigt.

4. Umhüllung zur Verpackung eines bzw. mehrerer Objekte nach Anspruch 3, **dadurch gekennzeichnet, dass** die Innenfläche (14) und/oder Außenfläche (13) der Hülle (11) von dem technischen Mittel (16, 17) im Bereich der Prägezonen überzogen ist, die während des Schrumpfens der genannten Hülle auf das bzw. die zu verpackenden Objekte von einer erhöhten Schrumpfrate betroffen sind, insbesondere einer Rate, die ungefähr 10 bis 15% übersteigt.

5. Umhüllung zur Verpackung eines bzw. mehrerer Objekte nach Anspruch 3 oder Anspruch 4, **dadurch gekennzeichnet, dass** das technische Mittel (16) auf die Innenfläche (14) und/oder Außenfläche (13) aufgetragen wird und das technische Mittel ein wärmehärtbarer Lack oder dergleichen ist, der das Schrumpfen der Wand der Hülle (11) im Bereich des Prägemotivs (15) lokal verhindert.

6. Umhüllung zur Verpackung eines bzw. mehrerer Objekte nach Anspruch 3 oder Anspruch 4, **dadurch gekennzeichnet, dass** das technische Mittel (16) auf die Innenfläche (14) und/oder Außenfläche (13) aufgetragen wird und das technische Mittel ein bei Wärme sich blähender Lack oder dergleichen ist, der die Wand der Hülle (11) im Bereich des Prägemotivs (15) während des Schrumpfens der Hülle (11) lokal zurückdrückt.

7. Umhüllung zur Verpackung eines bzw. mehrerer Objekte nach Anspruch 5 oder Anspruch 6, **dadurch gekennzeichnet, dass** der wärmehärtbare oder bei Wärme blähfähige technische Lack so gewählt wird, dass er bei einer Temperatur reaktivierbar ist, die mit dem Temperaturbereich der Wärmeschrumpfung der die Hülle (11) bildenden Folie kompatibel ist.

8. Umhüllung zur Verpackung eines bzw. mehrerer Objekte nach Anspruch 5 bis Anspruch 7, **dadurch gekennzeichnet, dass** der wärmehärtbare oder bei Wärme blähfähige technische Lack (16) auf eine Zone aufgetragen wird, die das Prägemotiv (15) umgibt.

9. Umhüllung zur Verpackung eines bzw. mehrerer Objekte nach Anspruch 5 bis 8, **dadurch gekennzeichnet, dass** der wärmehärtbare oder bei Wärme blähfähige technische Lack (16) auf die Innenfläche (14) oder Außenfläche (13) der Hülle (11) in die von dem Prägemotiv (15) ausgebildeten Hohlräume aufgetragen wird.

10. Umhüllung zur Verpackung eines bzw. mehrerer Objekte nach Anspruch 3 oder Anspruch 4, **dadurch gekennzeichnet, dass** das technische Mittel (17) auf die Innenfläche (14) oder Außenfläche (13) der Hülle (11) in die von dem Prägemotiv (15) ausgebildeten Hohlräume aufgetragen wird, und das technische Mittel eine starre oder halbstarre aufgebrachte Plakette ist.

11. Umhüllung zur Verpackung eines bzw. mehrerer Objekte nach Anspruch 10, **dadurch gekennzeichnet, dass** die starre oder halbstarre aufgebrachte Plakette (17) auf ihrer freien Fläche ein dünnes Raster (17, 17') aufweist, insbesondere ein Raster mit Mehrfachbrechung nach Art einer Linse.

12. Umhüllung zur Verpackung eines bzw. mehrerer Objekte nach einem der Ansprüche 1 bis 11, **dadurch gekennzeichnet, dass** die Innenfläche (14) und/oder Außenfläche (13) der Hülle (11) eine Rasterung oder dergleichen auf zumindest einigen der durch das Prägemotiv (15) ausgebildeten Reliefs aufweist.

13. Verfahren zum Herstellen einer Umhüllung zur Verpackung eines bzw. mehrerer Objekte nach einem der Ansprüche 1 bis 12, **dadurch gekennzeichnet, dass** die Folie (F), die dazu bestimmt ist, eine wärmeschrumpfbare Hülle (11) zu bilden, gemäß einem vorgegebenen Motiv (15) liegend geprägt wird, wobei die geprägte Folie (F) dann auf sich selbst derart umgeschlagen wird, dass das Motiv als Relief auf der konvexen Außenfläche (13) und/oder der konkaven Innenfläche (14) der Folie erscheint, und die betreffenden Endzonen (12) fest miteinander verbunden werden.

14. Verfahren nach Anspruch 13, **dadurch gekennzeichnet, dass** man eine halbstarre Folie verwendet, die in ihrer Formulierung eine elastomere Phase enthält.

15. Verfahren nach Anspruch 14, **dadurch gekennzeichnet, dass** die Folie (F) im Bereich des zu prägenden oder bereits geprägten Motivs (15) auf der Seite der Folie, die der hohlen Seite der Prägung entspricht und/oder der anderen Seite mit einem technischen Mittel (16, 17) überzogen wird, das so positioniert und ausgemacht ist, das es den Erhalt des Reliefs während des Schrumpfens der Wand der Folie begünstigt.

16. Verfahren nach Anspruch 15, **dadurch gekennzeichnet, dass** die betreffende Seite der Folie von einem technischen Mittel (16) überzogen wird, das aus einem wärmehärtbaren Lack oder dergleichen oder einem bei Wärme blähfähigen Lack oder dergleichen gebildet ist.

17. Verfahren nach Anspruch 15 oder Anspruch 16, **dadurch gekennzeichnet, dass** die Schritte des Prägens und des möglichen lokalen Beschichtens mit einem technischen Mittel (16) kontinuierlich auf der flach vorbeilaufenden Folie (F) ausgeführt werden, vor der Formung der Folie zu einem Endlosschlauch (G), der im flachen Zustand gelagert werden kann, indem er auf eine Spule (B) gewickelt wird, wobei die zur Verpackung eines bzw. mehrerer Objekte verwendeten Hüllen (11) durch Ablängen von dem genannten Endlosschlauch erhalten werden.

18. Verfahren nach Anspruch 15, **dadurch gekennzeichnet, dass** die betreffende Fläche der Folie in den Prägehohlräumen von einem technischen Mittel (17) überzogen wird, das aus einer starren oder halbstarren aufgebrachten Plakette gebildet ist.

19. Verfahren nach Anspruch 18, **dadurch gekennzeichnet, dass** die freie Fläche der starren oder halbstarren aufgebrachten Plakette (17) bearbeitet wird, um ein dünnes Raster aufzuweisen, insbesondere ein Raster mit Mehrfachbrechungen nach Art einer Linse.

20. Verfahren nach Anspruch 18 oder Anspruch 19, **dadurch gekennzeichnet, dass** die Schritte des Prägens und des Platzierens der aufgebrachten Plakette(n) (17) sowie auch des möglichen Bearbeitens der genannten aufgebrachten Plakette(n) kontinuierlich auf der flach vorbeilaufenden Folie (F) ausgeführt werden, vor der Formung der Folie zu einem Endlosschlauch (G), der im flachen Zustand lagerbar ist, indem er auf eine Spule (B) gewickelt wird, wobei die zur Verpackung eines bzw. mehrerer Objekte verwendeten Hüllen (11) durch Ablängen von dem genannten Endlosschlauch erhalten werden.

21. Verfahren nach Anspruch 17 oder Anspruch 20, **dadurch gekennzeichnet, dass** die Folie (F), die flach vorbeiläuft, im Bereich zumindest einiger der Prägereliefs eine Rasterung oder dergleichen aufweist.
